Europäisches Patentamt

European Patent Office

Office européen des brevets

(19)

(11) **EP 1 066 546 B1**

(12) **EUROPÄISCHE PATENTSCHRIFT**

(45) Veröffentlichungstag und Bekanntmachung des Hinweises auf die Patenterteilung:
**15.09.2004  Patentblatt 2004/38**

(51) Int Cl.$^7$: **G02F 1/37**, H01S 3/109

(21) Anmeldenummer: **99915698.7**

(22) Anmeldetag: **25.03.1999**

(86) Internationale Anmeldenummer:
**PCT/EP1999/001990**

(87) Internationale Veröffentlichungsnummer:
**WO 1999/049362 (30.09.1999 Gazette 1999/39)**

(54) **VERFAHREN UND VORRICHTUNG ZUR RESONANZVERSTÄRKUNG, INSBESONDERE ZUR ABSTIMMBAREN FREQUENZKONVERSION VON LASERSTRAHLUNG**

METHOD AND DEVICE FOR RESONANCE AMPLIFICATION, ESPECIALLY FOR ADJUSTABLE FREQUENCY CONVERSION OF LASER RADIATION

PROCEDE ET DISPOSITIF D'AMPLIFICATION PAR RESONANCE, PERMETTANT NOTAMMENT LA CONVERSION DE FREQUENCE REGLABLE D'UN RAYONNEMENT LASER

(84) Benannte Vertragsstaaten:
**FR GB**

(30) Priorität: **25.03.1998  DE 19814199**

(43) Veröffentlichungstag der Anmeldung:
**10.01.2001  Patentblatt 2001/02**

(73) Patentinhaber: **Spectra Physics GmbH
64291 Darmstadt (DE)**

(72) Erfinder:
• **ZANGER, Eckhard
  D-12169 Berlin (DE)**
• **MÜLLER, Ralf
  D-10825 Berlin (DE)**

• **GRIES, Wolfgang
  D-12159 Berlin (DE)**

(74) Vertreter: **Hengelhaupt, Jürgen D., Dipl.-Ing. et al
Anwaltskanzlei
Gulde Hengelhaupt Ziebig & Schneider
Wallstrasse 58/59
10179 Berlin (DE)**

(56) Entgegenhaltungen:
EP-A- 0 452 069        GB-A- 1 214 941
US-A- 5 260 953        US-A- 5 289 491
US-A- 5 289 493        US-A- 5 357 537

• XP0000489998

**Beschreibung**

Es sind bereits eine Vielzahl von Verfahren und Vorrichtungen bekannt, die eine Frequenzkonversion von kontinuierlicher Laserstrahlung mittels nichtlinearer Kristalle, insbesondere die Erzeugung der 2:Harmonischen, mit dem Ziel einer Erhöhung der Konversionseffizienz beschreiben.

Die "klassische Anordnung" zur Frequenzkonversion von Laserstrahlung, wie sie u.a. beschrieben ist in den Veröffentlichungen von M.Brieger et al.: "Enhancement of Single Frequency SHG in a Passive Ring Resonator" Opt. Commun. 38 (1981) p. 423; C.S.Adams et al. "Tunable narrow linewidth ultra-violet light generation...", Opt. Commun. 90 (1992) p 89 ;S.Bourzeix et al.: "Efficient frequency doubling of a continous wave ...", Opt. Commun. 99 (1993) p 89, besteht aus einem Resonator in Form eines Doppel-Z, der aus vier Spiegeln gebildet wird, von denen mindestens zwei einen Krümmungsradius besitzen, und einem nichtlinearen Kristall. Ein erster Spiegel ist auf einem Piezoelement montiert und dient der Abstimmung der Resonatorlänge auf Resonanz mit der einfallenden Lichtwelle. Der von einem dritten Spiegel reflektierte Teil der eingestrahlten Welle wird mit einem Detektor registriert. Mit üblichen Verfahren (Hänsch-Couillaud, Pound-Drever) kann daraus ein Regelsignal zur aktiven Resonatorstabilisierung gewonnen werden. Die Spiegelabstände, Krümmungsradien, Beschichtungen sowie der Kristall sind so gestaltet, daß

a) der Resonator optisch stabil ist,

b) sich zwischen den gekrümmten zwei Spiegeln am Ort des nichtlinearen Kristalls eine Strahltaille ausbildet, deren Größe optimal für eine effiziente Konversion ist,

c) der durch die gekrümmten Spiegel hervorgerufene Astigmatismus der zweiten Strahltaille zwischen weiteren zwei Spiegeln (dritter und vierter Spiegel), durch den brewstergeschnittenen Kristall kompensiert wird,

d) drei der Spiegel eine möglichst hohe Reflektivität für die Grundwelle besitzen,

e) einer der Spiegel für die erzeugte Harmonische eine möglichst hohe Transmission besitzt,

f) der Reflexionsgrad des Einkoppelspiegels so bemessen ist, daß die Resonanzüberhöhung der Grundwelle möglichst hoch ist, was bei Impedanzanpassung R=1-V (R: Reflexionsgrad, V: passive Resonatorverluste) der Fall ist,

g) für den nichtlinearen Kristall die Bedingung für Phasenanpassung erfüllt ist.

Mit solchen Anordnungen werden typischerweise Konversionseffizienzen zwischen 10% und 30% erreicht. Da in dieser Anordnung vier justierbare Spiegelhalter benötigt werden, ist der mechanische Aufwand relativ hoch. Da hochreflektierende Spiegel immer eine Resttransmission aufweisen, können die passiven Verluste dieser Anordnung nicht beliebig reduziert werden, wodurch dem Verstärkungsfaktor des Resonators eine Obergrenze gesetzt ist.

Wird die Resonatorabstimmung wie in dieser Anordnung durch Translation eines Spiegels vorgenommen, so ergeben sich einige Nachteile: Die maximal zulässige Translation wird durch die zunehmende Dejustierung des Resonators durch den geänderten Strahlengang begrenzt. Eine zusätzliche Dejustierung erfolgt durch die bei üblichen Piezoelementen auftrende Verkippung, die sich der Translationsbewegung überlagert. Einer kontinuierlicher Variation der eingestrahlten Lichtfrequenz kann der Resonator deshalb nur in einem begrenzten Frequenzintervall folgen (schnelle, kontinuierliche Frequenzdurchstimmung ist z.B. bei Laserkühlung von Atomen erforderlich).

Ein weiterer Nachteil der Spiegeltranslation tritt auf, wenn die Spiegel des Resonators zwecks Umrüstung auf einen anderen Wellenlängenbereich ausgetauscht werden sollen. Um dies ohne größeren Aufwand durchführen zu können, muß der Spiegel mittels einer Wechselfassung auf dem Piezoelement montiert werden, deren zusätzliche Masse die Regeldynamik für die Resonatorstabilisierung verschlechtert.

Für abstimmbare Frequenzkonversionssysteme werden meistens winkelabgestimmte Kristalle verwendet, da sich mit diesen die größten Wellenlängenbereiche abdecken lassen. Bei Änderung der eingestrahlten Wellenlänge muß der Kristall gedreht werden, um weiterhin die Bedingung für Phasenanpassung zu erfüllen. Bei dieser Drehung erfährt der Laserstrahl im Resonator einen Parallelversatz, der ein Nachjustieren des Resonators erforderlich macht. Die Strahllage der erzeugten Harmonischen wird bei dieser Nachjustierung merklich geändert. Bei Anwendungen, die eine konstante Strahllage erfordern, muß diese mit Hilfe eines nachgeschalteten Ablenksystems, wie z.B. einem Periskop aus zwei justierbaren Spiegeln, anschließend wieder korrigiert werden.

In anderen Veröffentlichungen, so in der US 5,007,065, werden monolithische oder, wie in den US 5,027,361, 5,227,911, 4,731,787, 4,797,896 beschrieben, werden halbmonolithische Anordnungen benutzt.

Gegenüber den diskret aufgebauten Resonatoren haben diese Anordnungen verschiedene Vorteile:

a) Sie sind mechanisch wesentlich stabiler und haben damit eine geringere Anfälligkeit gegen Störungen von außen.

b) Sie haben weniger Verluste durch eine geringere Anzahl von Grenzflächen im Resonator.

c) Teure präzisionsoptische Teile können entfallen.

Mit diesen Anordnungen werden Verdopplungseffizienzen bis zu 80% erreicht. Allerdings sind diese Anordnungen nur in sehr kleinen Wellenlängenintervallen abstimmbar und daher in der Anwendung auf Festfrequenzlaser, wie z.B. diodengepumpte Nd: YAG-Laser beschränkt. Eine nachträgliche Justierung oder Modifikation eines solchen Resonators ist nicht möglich. Bei einer teilweisen Beschädigung können einzelne Teile nicht oder nur unter hohem Aufwand ersetzt werden. Weiterhin ist die Herstellung der Kristalle, die den monolithischen bzw. halbmonolithischen Resonator bilden, sehr aufwendig (sphärisch geschliffene Oberflächen, spezielle Beschichtungen usw.). Diese Kristalle werden nicht auf dem Markt gehandelt und können nur in speziellen Labors hergestellt werden. Teilweise werden bei diesen Anordnungen auch Eigenschaften von Kristallen benutzt, die nur wenige Materialien erfüllen, wie zum Beispiel der hohe Koeffizient für den elektrooptischen Effekt beim Kristallmaterial Lithiumniobat, der zum Abstimmen des Resonators mit einer elektrischen Spannung benutzt wird. Die Beschränkung auf.solche Kristalle führt dann zu einer starken Einschränkung des Wellenlängenbereiches, der damit verdoppelt werden kann.

In den US 5,052,815 und 5,357,537 werden diodengepumpte Ringlaser beschrieben, deren Resonator aus nur zwei Spiegeln und einem oder mehreren brechenden Elementen bestehen. Sie nutzen die Flexibilität eines diskreten Aufbaus, der auch nach der Assemblierung die Justierung von Einzelelementen oder eine Modifikation durch Einbringen zusätzlicher optischer Elemente erlaubt. Die Resonatorverluste fallen durch die geringere Anzahl von Elementen gegenüber klassischen Ringlasern geringer aus. Diese Vorteile werden genutzt, um Ringlaser mit besserer Effizienz und günstigerer Herstellung zu realisieren. Alle dies Anordnungen enthalten ein aktives Lasermedium und werden explizit als Laseranordnung verwendet.

Eine ähnliche Vorrichtung bzw. ein Verfahren zur Frequenz-Konversion ist aus EP 0 452 069 bekannt, die den Oberbegriff der unabhängigen Ansprüche bilden.

In einer weiteren bekannten Anordnung (M. Watanabe et al.: "Continous-wave sum-frequency generation near 194nm...", Opt. Commun. 97 (1993) p. 225 ) wird ein Prisma verwendet, um zwei verschiedene Wellenlängen gleichzeitig resonant zu verstärken. In diesem Fall wird die dispergierende Eigenschaft von Prismen genutzt, um zwei Laserstrahlen unterschiedlicher Wellenlängen zu vereinigen. Die beiden Laserstrahlen werden in zwei unabhängigen Resonatoren verstärkt, in deren gemeinsamem Zweig sich ein nichtlinearer Kristall befindet, der eine Summenfrequenz aus den beiden Laserstrahlen erzeugt.

In der DD 145 588 werden Verfahren zur Impulsverkürzung bzw. -selektion von $CO_2$-Lasern beschrieben, bei denen der einlaufende Laserimpuls durch einen Strahlteiler in einen schaltenden und einen zu schaltenden Strahl aufgeteilt wird. Der schaltende Strahl wird über einen Umlenkspiegel und eine Linse auf eine Einheit zur Erzeugung der zweiten Harmonischen der Grundwelle fokussiert. Die zweite Harmonische wird sodann auf einen Schaltkristall geführt, der für die zweite Harmonische entspiegelt und für die Grundwelle verspiegelt ist. Der zu schaltende Strahl wird verzögert auf eine Linse mit kurzer Brennweite gelenkt, die ihn in das Fokusvolumen des schaltenden Strahles bündelt. Bei dieser Anordnung zur Impulsverkürzung wird die Weglänge eines Strahlenganges durch Verschiebung eines Retro-Reflexionsprismas geändert, ohne daß sich der Strahlengang außerhalb der Anordnung ändert. Durch Ergänzung geeigneter Spiegel kann daraus ein Resonator gebildet werden, der sich durch Verschiebung des Retro-Reflexionsprismas abstimmen läßt. Das Retro-Reflexionsprisma ermöglicht jedoch keine hohe Konversionseffizienz, da zusätzliche Grenzflächen in den Strahlengang eingebracht werden müssen, die Verluste erzeugen und die Effizienz mindern. Ebenso effizienzmindernd wirken sich die Ablenkwinkel von 180° aus, die zu großen Einfallswinkeln bei den Resonatorspiegeln führen, die als gekrümmte Spiegel ausgeführt werden müssen, um optisch stabile Resonatoren zu erhalten. Die hohen Einfallswinkel bei gekrümmten Spiegeln führen zu starkem Astigmatismus, der effizienzmindernd wirkt.

In der NL-Zeitschrift "Optics Communications", Vol. 53, No.1, 1985, S.43-47, wird eine spiegelfreie Konfiguration für einen cw-Ring-Farblaser beschrieben, bei der ein spezielles Prisma dazu verwendet wird, den Resonator aufzubauen.

Mit den beschriebenen Fokussierprismen und Littrow-Prismen kann zwar ein optisch stabiler, astigmatisch kompensierter und abstimmbarer Resonator aufgebaut werden, es kann aufgrund der Vielzahl von Grenzflächen jedoch keine effiziente Frequenzkonversion bzw. eine Resonanzverstärkung mit brauchbarem Überhöhungsfaktor erreicht werden.

Aufgabe der Erfindung ist es, ein gattungsgemäßes Verfahren und eine Vorrichtung zu entwickeln, mit denen die insbesondere Frequenzkonversion von insbesondere kontinuierlicher Laserstrahlung unter Vermeidung der beschriebenen Nachteile mit hoher Effizienz und mit denen über einen möglichst großen Wellenlängenbereich eine verbesserte Abstimmbarkeit bezüglich der eingestrahlten Wellenlängen gewährleistet werden. Bei der Verbesserung der Abstimmbarkeit sollen insbesondere

- der kontinuierliche Abstimmbereich vergrößert werden,
- der Vorgang des Nachstellens von Komponenten vereinfacht
- und die Zahl der auszutauschenden Komponenten verringert und der Austausch vereinfacht werden.

Bei der verbesserten Abstimmbarkeit der eingestrahlten Wellenlängen sind dabei folgende Fälle zu unterscheiden:

    Fall 1: Die eingestrahlte Wellenlänge wird kontinuierlich um so kleine Beträge geändert, daß die Phasenanpassung für den Kristall erhalten bleibt, d.h. lediglich die Resonatorlänge muß nachgestellt werden, während der Kristall nicht gedreht werden muß. Die Wellenlängenänderungen sind in diesem Fall typischerweise kleiner als 1nm.

Fall 2: Die eingestrahlte Wellenlänge wird um Beträge geändert, die ein Nachstellen des Kristalls oder anderer Komponenten erforderlich machen, nicht jedoch einen Austausch von optischen Komponenten. Hier handelt es sich um Änderungen in der Größenordnung 50nm.

Fall 3: Die eingestrahlte Wellenlänge wird um Beträge geändert, die einen Komponentenaustausch (Spiegel, Kristall) erforderlich machen. Hierbei geht es um Änderungen, die größer als 50nm sind und bis zu 1000nm betragen können.

Die angestrebte Verbesserung der Abstimmbarkeit eines solchen Frequenzkonversionssystems bezieht sich auf alle drei Fälle. Im Fall 1 soll der kontinuierliche Abstimmbereich vergrößert werden, d.h. der Resonator soll zu jedem Zeitpunkt auf die sich kontinuierlich ändernde Wellenlänge des Laserstrahls abgestimmt sein, wobei Modensprünge des Resonators nicht zulässig sind. Im Fall 2 soll der Vorgang des Nachstellens von Komponenten vereinfacht werden, wodurch die Möglichkeit einer automatisierten (motorischen) Abstimmung geschaffen wird. Im Fall 3 soll die Zahl der auszutauschenden Komponenten verringert werden und der Austausch in der Handhabung möglichst vereinfacht werden.

Die Lösung der Aufgabe ergibt sich aus den Merkmalen der Ansprüche 1 und 6. In den Unteransprüchen sind zweckmäßige Ausführungsformen angegeben.

Aus der Anwendung der Erfindung ergeben sich gegenüber den bekannten Anordnungen insbesondere die folgenden Vorteile:

1. Gegenüber dem klassischem 4-Spiegel-Aufbau besteht der Resonator aus weniger Elementen, wodurch die passiven Verluste verringert werden und die Konversionseffizienz erhöht wird.

2. Gegenüber dem klassischem 4-Spiegel-Aufbau ist eine wesentlich kompaktere Bauform realisierbar.

3. Durch den kompakteren Aufbau wird der Resonator unempfindlicher gegen äußere Störeinflüsse.

4. Kostenersparnis: Es werden nur 2 Präzisionsspiegelhalter gegenüber 4 beim klassischen Resonator benötigt.

5. Durch die geringere Resonatorlänge gegenüber dem klassischen Aufbau wird der Freie Spektralbereich des Resonators deutlich größer und damit erhöht sich auch die Akzeptanzbreite des Resonators (bei gleichbleibender Resonatorgüte) bezüglich der Frequenzbandbreite der einfallenden Strahlung.

Daher können auch Laserstrahlquellen schlechterer Qualität mit dieser Anordnung konvertiert werden.

6. Gegenüber monolithischen und halbmonolithischen Anordnungen: Es werden nur Elemente verwendet, die auf dem Markt problemlos erhältlich und kostengünstig sind (bei Prisma und Kristall nur plane und unbeschichtete Flächen, Spiegel in Standard-Substratgrößen und Standard-Schichten).

7. Die Resonatorlängenabstimmung durch Translation des Prismas ermöglicht einen größeren Frequenzhub als bei Translation eines Spiegels.

8. Die Strahlversatzkompensation durch gegensinnige Drehung des Prismas vergrößert den Wellenlängenbereich, der ohne Nachjustierung des Resonators überdeckt werden kann.

9.Bei Abstimmung durch Komponentenaustausch müssen lediglich zwei Spiegel und der Kristall ausgetauscht werden. Die Halterungen können für diesen Zweck optimiert werden, ohne daß dafür Nachteile wie z.B. die Verschlechterung der Regeldynamik in Kauf genommen werden müssen.

Die Erfindung wird nachfolgend in mehreren Ausführungsbeispielen von Resonatoren-Anordnungen näher beschrieben. In der dazugehörigen Zeichnung zeigen:

Fig. 1    eine schematische Darstellung der "klassischen Anordnung" nach dem Stand der Technik,

Fig. 2    die schematische Darstellung einer Grundanordnung,

Fig. 3    die schematische Darstellung des Strahlengangs im Prisma,

Fig. 4    die schematische Darstellung einer ersten Ausführungsform nach der Erfindung,

Fig. 5    das Diagramm zur Darstellung des vertikalen Strahlversatzes bei einer durchstrahlten Prismenlänge von 10mm,

Fig. 6    das Diagramm zur Darstellung des vertikalen Ablenkwinkels durch Drehung des Prismas,

Fig. 7    das Diagramm zur Darstellung des horizontalen Ablenkwinkels durch Drehung des Prismas,

Fig. 8    die schematische Darstellung der Anordnung mit exakter Kompensation und

Fig. 9    die schematische Darstellung der Anordnung mit Einkopplung über ein Prisma.

Besonderer Wert wird bei der Frequenzkonversion von kontinuierlicher Laserstrahlung nach der Erfindung auf die Abstimmbarkeit über einen möglichst großen Wellenlängenbereich gelegt. Bei der Abstimmung bezüglich der eingestrahlten Wellenlängen sind mehrere Fälle zu unterscheiden, wie sie in der Aufgabenstellung dargestellt wurden.

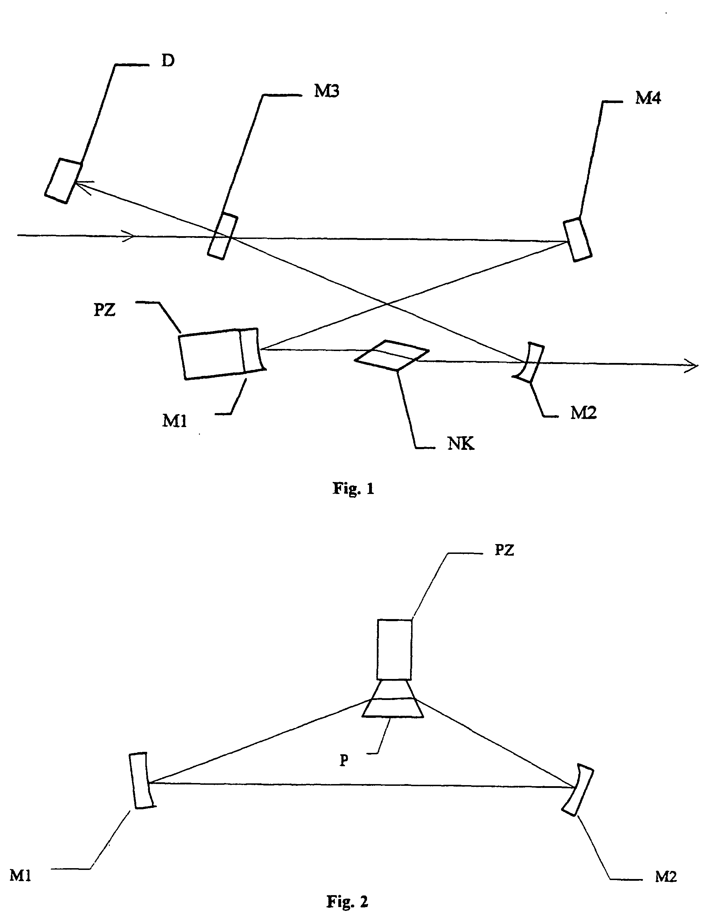

Entsprechend der Darstellung in der Fig. 2 wird in der Grundanordnung ein Resonator aus Spiegeln M1 und M2 und aus einem brechenden Element P gebildet.

Das brechende Element P hat die Funktion eines Prismas, wird aber zur einfacheren Montage und wegen der geringeren Masse in Trapezform ausgeführt (im folgenden der Einfachheit halber trotzdem Prisma genannt). Da keiner der Spiegel M1, M2 zur Resonatorabstimmung benutzt wird, können beide ohne Rücksicht auf ihre Massenträgheit in leicht erhältlichen Standardgrößen ausgeführt werden. Die Spiegelhalter können in Hinblick auf einfache Austauschbarkeit der Spiegel M1, M2 optimiert werden.

Das Prisma aus hochtransparentem Material, zum Beispiel hochreines Quarzglas, erhält keine Beschichtung. Der Winkel der brechenden Flächen zueinander wird so gewählt, daß Ein- und Austritt des Strahls unter Brewsterwinkel bzw. nahe Brewsterwinkel erfolgt. Bei hochreinem Quarzglas ergeben sich für einen Scheitelwinkel von 69° im Wellenlängenbereich 400nm bis 1000nm Reflexionsverluste kleiner als 0.01%. Das Prisma wird ohne Fassung direkt auf ein Piezoelement PZ angebracht, da ein Austausch des Prismas bei Wechsel des Wellenlängenbereiches nicht notwendig ist. Um die bewegte Masse möglichst gering zu halten, erfolgt die Befestigung des Prismas vorzugsweise durch Klebung.

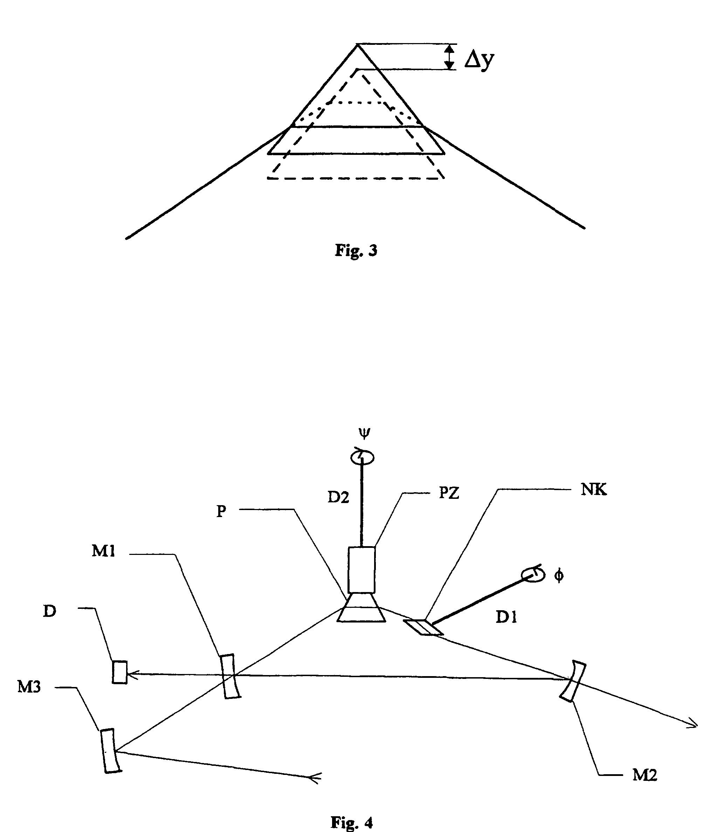

Wie aus der Fig. 3 hervorgeht, ändert sich der Strahlengang im Resonator nicht, wenn das Prisma in Richtung seiner Symmetrieachse translatiert wird. Maßgeblich für die Resonatorabstimmung ist die optische Weglänge. Wird das Prisma um den Betrag $\Delta y$ in Richtung seiner Symmetrieachse bewegt, ändert sich die optische Weglänge um

$$\Delta L = 2\Delta y(n \sin 2\alpha - 1) \approx 0.7\Delta y.$$

(n: Brechungsindex Prisma, $\alpha$: Einfallswinkel)

Wegen des symmetrischen Strahlenganges im Prisma liegt hier das Minimum der Ablenkung vor. Daher wirken sich Verkippungen des Prismas erst in zweiter Näherung auf den Strahlengang im Resonator aus. Diese beiden Eigenschaften der Anordnung ermöglichen einen wesentlich größeren Abstimmbereich nach Fall 1, da hiermit größere Translationswege realisierbar sind, ohne den Resonator zu dejustieren.

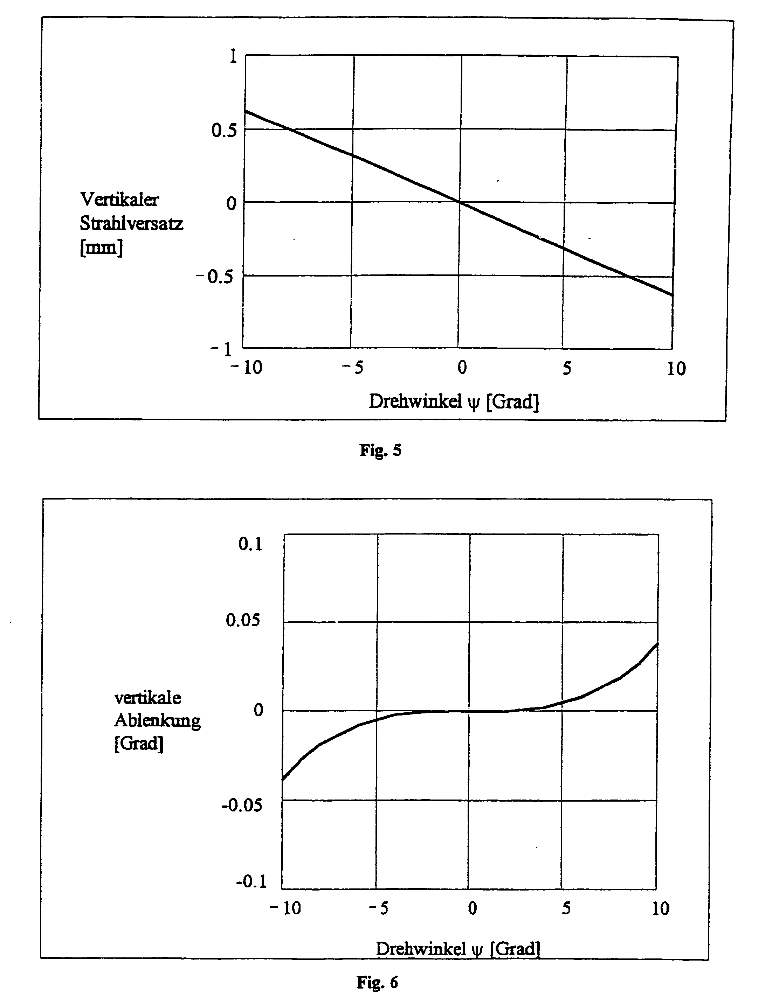

Bei der bevorzugten Ausführungsform nach Fig. 4 dient der Spiegel M1 als Einkoppelspiegel. Die Reflektivität bei der Grundwellenlänge wird so gewählt, daß Impedanzanpassung (R=1-V , V: passive Verluste) vorliegt. Der Spiegel M2 dient als Auskoppelspiegel und wird daher auf der Grundwellenlänge hochreflektierend, und auf der Wellenlänge der erzeugten Harmonischen hochtransmittierend ausgeführt. Die Frequenzkonversion wird mit einem brewstergeschnittenen, winkelabgestimmten nichtlinearen Kristall NK vorgenommen, der sich zwischen dem Prisma P und dem Auskoppelspiegel M2 befindet. Zur Winkelabstimmung wird der Kristall um eine. Achse D1 gedreht, die in der Ringebene liegt und senkrecht zum Strahlengang innerhalb des Kristalls steht. Der entstehende Strahlversatz bei Drehung des Kristalls kann bei kleinen Winkeln durch eine gegensinnige Drehung des Prismas kompensiert werden. Das Prisma wird dabei um seine Symmetrieachse D2 gedreht. Da bei dem gewählten Strahlengang das Minimum der Ablenkung vorliegt, bewirkt eine Drehung des Prismas in erster Näherung lediglich einen Strahlversatz, jedoch keine Richtungsablenkung. Die Ergebnisse numerischer Berechnungen des Strahlversatzes und der Ablenkwinkel, die durch die Drehung des Prismas hervorgerufen werden, sind in den Fig. 5, 6 und 7 graphisch dargestellt. Um Kompensation zu erreichen, muß der Drehwinkels $\psi$ für das Prisma der Beziehung

$$\Psi = \{d_k \, n_p \, (n_k-1)/d_p \, n_k \, (n_p-1)\} \, \phi$$

genügen, wobei $\phi$ der Drehwinkel des Kristalls, $n_k$ und $n_p$ die Brechungsindizes von Kristall bzw. Prisma, $d_k$ und $d_p$ die Weglängen im Kristall bzw. im Prisma bedeuten. Eine einfache mechanische Kopplung der Kristalldrehung mit der Prismendrehung gemäß der angegebenen Beziehung ermöglicht daher eine Winkelabstimmung des Kristalls ohne gleichzeitig den Resonator zu dejustieren. Da die Prismendrehung in zweiter Näherung eine Strahlablenkung bewirkt, ist dies nur für einen beschränkten Winkelbereich möglich. In der weiter unten beschriebenen Anordnung mit einem zusätzlichen Kompensatorelement kann dagegen exakte Kompensation erreicht werden, die jedoch mit erhöhten Resonatorverlusten erkauft werden muß.

Die Resonatoranordnung nach Fig. 4 enthält vier Elemente, die astigmatische Verzerrungen hervorrufen: Die gekrümmten Spiegel M1 und M2, das Prisma P sowie der nichtlineare Kristall NK. Die von den Spiegeln hervorgerufenen Astigmatismen unterscheiden sich dabei im Vorzeichen von denen des Prismas und des Kristalls. Dieses gegensätzliche Vorzeichen wird in der klassischen Anordnung nach Fig. 1 benutzt, um den Astigmatismus derjenigen Strahltaille des Resonators, auf die der eingekoppelte Strahl idealerweise unter mode-matching-Bedingungen abgebildet wird, zu kompensieren. Das ist erforderlich, um die gesamte Leistung eines Laserstrahls mit beugungsbegrenztem, rundem Gaussprofil (TEM$_{00}$-Mode) in die Grundmode des Resonators einkoppeln zu können. Im Fall des hier beschriebenen Resonators ist eine vollständige Astigmatismuskompensation wegen der verringerten Anzahl von Freiheitsgraden nicht möglich. Die Kompensation des Astigmatismus erfolgt daher teilweise außerhalb des Resonators über einen sphärisch gekrümmten Spiegel M3 (siehe Fig. 4). Dies bedeutet keinen höheren Aufwand als sonst, da zur exakten Abbildung des eingekoppelten Laserstrahls ohnehin ein justierbares Ablenksystem, wie z.B. ein aus zwei Spiegeln bestehendes Periskop, benötigt wird. Anstelle der sonst verwendeten Planspiegel wird in diesem Fall einer der Periskopspiegel als Hohlspiegel ausgeführt.

Grundsätzlich kann in der beschriebenen Anordnung auch ein kubisch geschnittener, nichtlinearer Kristall unter senkrechtem Lichteinfall verwendet werden, dessen Ein und Austrittsflächen mit entsprechenden Antireflexbeschichtungen versehen sind. In diesem Fall sind etwas höhere Konversionseffizienzen möglich, da die Verluste der erzeugten Harmonischen an der Austrittsseite des Kristalls geringer ausfallen. Ob damit ein Effizienzgewinn erreicht wird, ist jedoch stark von der Qualität der verwendeten Antireflexschichten abhängig. Zudem entstehen durch die notwendigen Antireflexbeschichtungen zusätzliche Kosten.

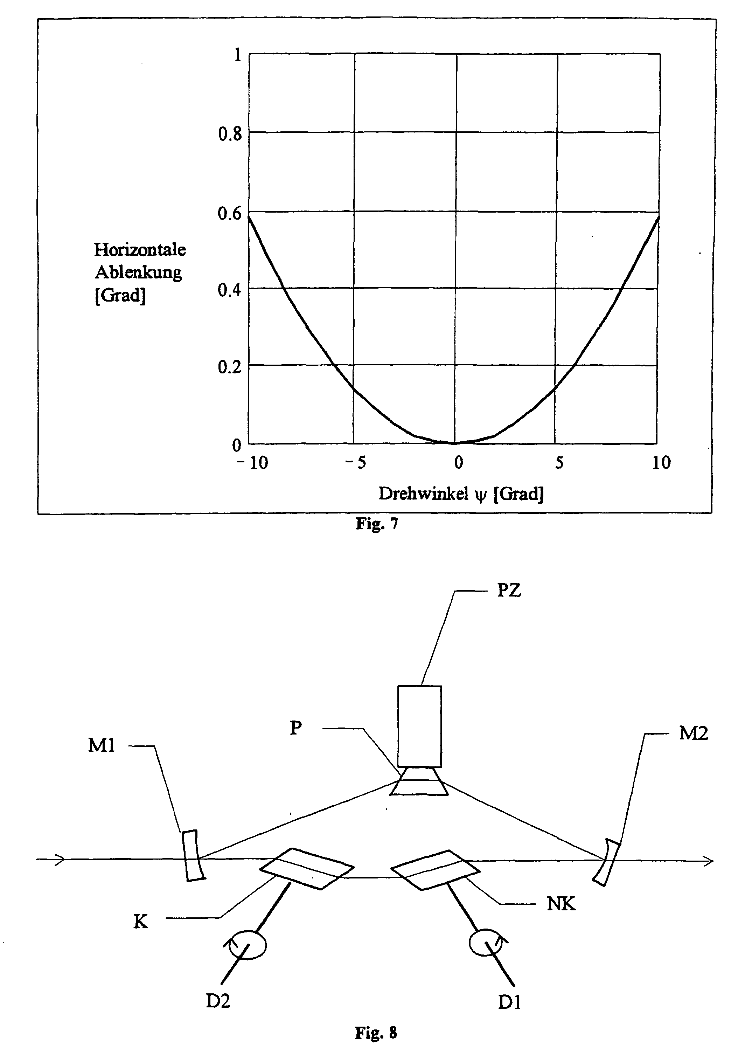

In einer weiteren Ausführungsform nach Fig. 8 wird eine zusätzliche planparallele Platte K aus hochtransparentem Material (vorzugsweise hochreines Quarzglas) unter Brewsterwinkel in den Strahlengang gebracht. Der Strahlversatz durch den nichtlinearen Kristall NK wird in dieser Anordnung durch gegensinnige Drehung der planparallelen Platte kompensiert, wogegen das Umlenkprisma P nicht bewegt wird. Ansonsten entspricht die Anordnung der nach Fig. 4. Da die planparallele Platte K ebenso wie der nichtlineare Kristall NK bei Drehung um die Achse D2 bzw. D1 keinerlei Winkelablenkung des Strahls bewirkt, kann der Strahlversatz des Kristalls bei geeignetem Drehwinkel und Drehsinn exakt kompensiert werden. Der nutzbare Wellenlängenbereich bei Abstimmung nach Fall 2 (s.o.) ist dadurch nur noch durch die erhöhten Verluste bei Abweichung vom Brewsterwinkel begrenzt. Die Vergrößerung des Abstimmbereiches nach Fall 2 gegenüber der Anordnung in Fig. 4 hat allerdings den Nachteil etwas höherer Verluste, die durch das zusätzliche Element hervorgerufen werden. Wie in der vorher beschriebenen Anordnung kann auch hier ein kubisch geschnittener Kristall mit Antireflexbeschichtungen verwendet werden, um die Auskoppelverluste der erzeugten Harmonischen zu verringern. In diesem Fall empfiehlt es sich, die Kompensatorplatte ebenfalls unter senkrechtem Einfall und mit Antireflexbeschichtungen zu verwenden, um eine exakte Kompensation zu gewährleisten. Eine weitere mögliche Variante ist die Kompensation durch einen zweiten, spiegelsymmetrisch angeordneten Kristall vorzunehmen. Diese Anordnung hat den Vorteil daß der effizienzmindernde walk-off-Winkel des Kristalls ebenfalls kompensiert wird.

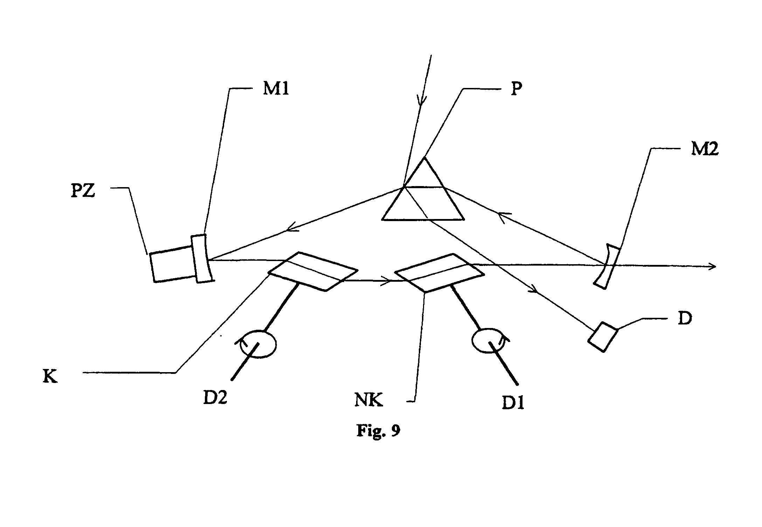

Bei der Ausführungsform nach Fig. 9 wird der Grundwellenstrahl nicht über den Spiegel M1, sondern über eine der (unbeschichteten) Prismenflächen eingekoppelt. Im Unterschied zu den Anordnungen nach Fig. 4 und 8 wird hier der Scheitelwinkel des Prismas so gewählt, daß der Einfallswinkel an der Einkoppelfläche des Prismas kleiner als der Brewsterwinkel und der Einfallswinkel an der anderen Prismenfläche gleich dem Brewsterwinkel ist. Der genaue Wert für den Scheitelwinkel bestimmt sich aus der Bedingung für Impedanzanpassung: Der durch die Fresnellbeziehungen bestimmte Reflexionsgrad R der Einkoppelfläche für den eingekoppelten Strahl soll den passiven Verlusten V des Resonators entsprechen ( R=V). Verwendet man ein handelsübliches, gleichseitiges Prisma aus Quarz (Scheitelwinkel 60°), so ergibt sich ein Reflexionsgrad von etwa 1.3%. Dies entspricht in etwa dem Wert für die passiven Verluste, die üblicherweise bei diesen Resonatoren erreicht werden. Durch die Verwendung von unbeschichteten Standardprismen kann daher das Einkoppelelement äußerst kostengünstig realisiert werden. Zudem ist dieses Einkoppelelement nahezu achromatisch, da sich der Reflexionsgrad über große Wellenlängenbereiche kaum ändert. Da der nutzbare Wellenlängenbereich eines Spiegelsatzes im wesentlichen durch die teilreflektierende Einkoppelschicht bestimmt wird, deren Wellenlängenbereich grundsätzlich kleiner ist als bei hochreflektierenden Schichten, kann mit der hier beschriebenen Anordnung der nutzbare Wellenlängenbereich eines Spiegelsatzes vergrößert werden. Die Resonatorabstimmung erfolgt hier zweckmäßigerweise durch Translation des Spiegels M1, da die gleichzeitige Verwendung als Einkoppelelement und als Abstimmelement Platzprobleme verursacht. Außerdem sind die Vorteile der Prismentranslation hier nicht mehr in vollem Umfang vorhanden. Ansonsten entspricht diese Anordnung der nach Fig. 8. Nachteilig bei der Anordnung nach Fig. 9 gegenüber der Anordnung in Fig. 8 ist die schwierigere Justierung. Das Prisma muß in diesem Fall justierbar gehaltert werden, da es sowohl den Strahlengang im Resonator als auch die Strahllage des eingekoppelten Strahls beeinflußt. Eine iterationsfreie und unabhängige Justierung von eingekoppeltem Strahl und Resonator, wie sie bei den Anordnungen nach Fig. 4 und 8 vorliegt, ist in dieser Anordnung nicht möglich. Die genaue Form von Kristall und Kompensator kann hier natürlich ebenso wie bei der zuvor beschriebenen Anordnung variiert werden (kubischer Kristall, zwei Kristalle).

Bezugszeichenliste

D 1    Achse

D 2    Achse

K      Platte

M 1    Spiegel

M 2    Spiegel

M 3    Spiegel

NK     nichtlinearer Kristall

P      brechendes Element

## Patentansprüche

1. Verfahren zur resonanten Frequenzkonversion von Laserstrahlung, mit einem ringförmigen Resonator, bestehend aus zwei Spiegeln (M1, M2), einem brechenden Element (P) mit mindestens zwei brechenden Flächen und einem nicht-linearen Kristall (NK), **dadurch gekennzeichnet, dass** der Strahlengang durch die zwei brechenden Flächen des brechenden Elements (P) derart geführt wird, dass das Minimum der Strahlablenkung vorliegt, und die Resonatorabstimmung auf die Frequenz der einfallenden Laserstrahlung durch Translation des brechenden Elements (P) entlang seiner Symmetrieachse (D2) erfolgt, um hierdurch eine Dejustierung des Resonators zu vermeiden.

2. Verfahren nach Anspruch 1, **dadurch gekennzeichnet, dass** die Frequenzkonversion mit einem winkelabgestimmten nichtlinearen Kristall (NK) vorgenommen wird, der zwischen dem brechenden Element (P) und einem Auskoppelspiegel (M2) angeordnet ist.

3. Verfahren nach einem der vorhergehenden Ansprüche, **dadurch gekennzeichnet, dass** der nichtlineare Kristall (NK) zur Phasenanpassung um eine Achse (D1) gedreht wird, welche in der Ringebene liegt und eine senkrechte Komponente zum Strahlengang innerhalb des Kristalls (NK) besitzt, und dessen Strahlversatz durch eine Drehung des brechenden Elements (P) um seine Symmetrieachse (D2), kompensiert wird.

4. Verfahren nach einem der Ansprüche 1 oder 2, **dadurch gekennzeichnet, dass** eine planparallele Platte (K) aus hochtransparentem Material unter Brewsterwinkel in den Strahlengang gebracht wird, und dass der Strahlversatz durch den nichtlinearen Kristall (NK) durch Drehung der Platte (K) um eine Achse (D2), welche in Ringebene liegt, kompensiert wird, wobei das brechende Element (P) nicht bewegt wird.

5. Verfahren nach Anspruch 2 oder 3, **dadurch gekennzeichnet, dass** der Grundwellenstrahl über eine der unbeschichteten Flächen des brechenden Elements (P) eingekoppelt wird und dass die Resonatorabstimmung durch Translation eines der Spiegel (M1, M2) vorgenommen wird.

6. Vorrichtung zur Resonanzverstärkung, insbesondere zur abstimmbaren Frequenzkonversion von kontinuierlicher Laserstrahlung, mit einem Resonator aufweisend einen ersten Spiegel (M1), einen zweiten Spiegel (M2), einen nicht-linearen Kristall (NK) und ein trapezförmiges, brechendes Element (P), welches die Funktion eines Prismas ausübt, **gekennzeichnet durch** Mittel zur translatorischen Bewegung des brechenden Elements (P) entlang seiner Symmetrieachse (D2).

7. Vorrichtung nach Anspruch 6, **dadurch gekennzeichnet, dass** das Mittel zur translatorischen Bewegung des brechenden Elements (P) ein Piezoelement (PZ) ist.

8. Vorrichtung nach einem der Ansprüche 6 oder 7, **dadurch gekennzeichnet, dass** die Krümmungsradien der Spiegel (M1, M2) und die Abstände der Resonatorelemente (PZ, M1, M2) so gewählt sind, dass der hierdurch gebildete Resonator optisch stabil ist, und dass der Reflexionsgrad des Einkoppelspiegels (M1) so bemessen ist, dass Impedanzanpassung vorliegt und dass der Auskoppelspiegel (M2) auf der Grundwellenlänge hochreflektierend und auf der konvertierten Wellenlänge transparent ausgebildet ist.

9. Vorrichtung nach einem der Ansprüche 6 oder 8, **dadurch gekennzeichnet, dass** das brechende Element (P) ein Prisma ist.

10. Vorrichtung nach einem der Ansprüche 6 bis 9, **dadurch gekennzeichnet, dass** das brechende Element (P) ohne Fassung direkt auf das Piezoelement (PZ) aufgebracht ist.

11. Vorrichtung nach Anspruch 10, **dadurch gekennzeichnet, dass** das brechende Element (P) auf das Piezoelement (PZ) aufgeklebt ist.

12. Vorrichtung nach einem der Ansprüche 6 bis 11, **dadurch gekennzeichnet, dass** das brechende Element (P) aus hochtransparentem Material ohne Beschichtung besteht, wobei der Winkel der brechenden Flächen zueinander so gewählt ist, dass der Ein- und Austritt des Strahls nahe Brewsterwinkel erfolgt.

13. Vorrichtung nach einem der Ansprüche 6 bis 12, **dadurch gekennzeichnet, dass** der erste Spiegel (M1) als Einkoppelspiegel und der zweite Spiegel (M2) als Auskoppelspiegel beschichtet ist, und dass der nichtlinearer Kristall (NK) zwischen dem brechenden Element (P) und dem Auskoppelspiegel (M2) angeordnet ist.

14. Vorrichtung nach einem der Ansprüche 6 bis 13,
**dadurch gekennzeichnet, dass**
der nichtlinearer Kristall (NK) ein brewstergeschnittener, winkelabgestimmter nichtlinearer Kristall (NK) ist.

15. Vorrichtung nach Anspruch 14,
**dadurch gekennzeichnet, dass**
zur Kompensation von Abbildungsfehlern ein sphärisch gekrümmter Spiegel (M3) außerhalb des Resonators angeordnet ist.

16. vorrichtung nach Anspruch 15,
**dadurch gekennzeichnet, dass**
der sphärisch gekrümmte Spiegel (M3) durch einen als Hohlspiegel ausgebildeten Periskopspiegel ausgebildet ist.

17. Vorrichtung nach einem der Ansprüche 6 bis 15,
**dadurch gekennzeichnet, dass**
der nichtlineare Kristall (NK) kubisch ausgebildet und unter senkrechtem Lichteinfall angeordnet ist, wobei die Ein- und Austrittsflächen des nichtlinearen Kristalls (NK) mit Antireflexbeschichtungen versehen sind.

18. Vorrichtung nach einem der Ansprüche 6 bis 15,
**dadurch gekennzeichnet, dass**
eine planparallele Platte (K) aus hochtransparentem Material unter Brewsterwinkel im Strahlengang angeordnet ist.

19. Vorrichtung nach einem der Ansprüche 6 bis 15 und 18,
**dadurch gekennzeichnet, dass**
die planparallele Platte (K) unter senkrechtem Lichteinfall angeordnet und mit Antireflexbeschichtungen versehen ist.

20. Vorrichtung nach einem der Ansprüche 6 bis 14,
**dadurch gekennzeichnet, dass**
im Strahlengang ein zum Kristall (NK) spiegelsymmetrisch angeordneter zweiter Kristall angeordnet ist.

21. Vorrichtung nach einem der Ansprüche 6 bis 18,
**dadurch gekennzeichnet, dass**
der Scheitelwinkel des brechenden Elementes (P) so gewählt ist, dass der Einfallswinkel an der Einkoppelfläche kleiner als der Brewsterwinkel und der Einfallswinkel an der Auskoppelfläche gleich dem Brewsterwinkel ist, wobei das Piezoelement (PZ) am ersten Spiegel (M1) angeordnet ist.

22. Vorrichtung nach einem der Ansprüche 6 bis 21,
**dadurch gekennzeichnet, dass**
die Kristalle (NK), das brechende Element (P) und die planparallele Platte (K) drehbar angeordnet sind.

**Claims**

1. Method for the resonant frequency conversion of laser radiation, with a ring resonator, consisting of two mirrors (M1, M2), a refractive element (P) with at least two refractive surfaces and a non-linear crystal (NK),
**characterized in that**
the beam path crosses the two refractive surfaces of the refractive element (P) such that a minimal beam deflection occurs and the resonator tuning is performed by translation of the refractive element (P) along its axis of symmetry (D2) in order to prevent loss of alignment of the resonator.

2. Method according to Claim 1,
**characterized in that**
the frequency conversion is performed with an angle-tuned, non-linear crystal (NK) which is located between the refractive element (P) and an outcoupling mirror (M2).

3. Method according to one of the preceding Claims,
**characterized in that**
the non-linear crystal (NK) is rotated about an axis (D1) for phase adjustment, said axis being located in the ring plane and having a component perpendicular to the beam path within the crystal (NK), and its beam shift is compensated by a rotation of the refractive element (P) about its axis of symmetry (D2).

4. Method according to one of the Claims 1 or 2,
**characterized in that**
a plane-parallel plate (K) of highly transparent material is located at the Brewster angle in the beam path and that the beam shift caused by the non-linear crystal (NK) is compensated by a rotation of the plate (K) about an axis (D2) that is located in the ring plane and that the refractive element (P) is not moved.

5. Method according to one of the Claims 2 or 3,
**characterized in that**
the fundamental wave beam is injected via one of the uncoated surfaces of the refractive element (P) and that the resonator tuning is performed by translation of one of the mirrors (M1, M2).

6. Device for resonance amplification, in particular for tunable frequency conversion of continuous laser radiation, with a resonator possessing a first mirror (M1); a second mirror (M2), a non-linear crystal (NK) and a trapezoidal refractive element (P) serving as a prism,
**characterized by**
means for translational motion of the refractive element (P) along its axis of symmetry (D2).

7. Device according to Claim 6,
**characterized in that**
the means for translational motion of the refractive element (P) is a piezoelement (PZ).

8. Device according to one of the Claims 6 or 7,
**characterized in that**
the radii of curvature of the mirrors (M1, M2) and the spacing of the resonator elements (PZ, M1, M2) are selected so that the resonator formed is optically stable and that the reflectivity of the incoupling mirror (M1) is such that impedance matching occurs and that the outcoupling mirror (M2) is highly reflective at the fundamental wavelength and is transparent at the converted wavelength.

9. Device according to one of the Claims 6 or 8,
**characterized in that**
the refractive element (P) is a prism.

10. Device according to one of the Claims 6 to 9,
**characterized in that**
the refractive element (P) is attached directly to the piezoelement (PZ) without a frame.

11. Device according to Claim 10,
**characterized in that**
the refractive element (P) is attached to the piezoelement (PZ) by adhesive.

12. Device accroding to one of the Claims 6 to 11,
**characterized in that**
the refractive element (P) consists of highly transparent material without coating, and the angle formed by the refractive surfaces is selected so that the input and output of the beam occurs near the Brewster angle.

13. Device according to one of the Claims 6 to 12,
**characterized in that**
the first mirror (M1) is coated as an incoupling mirror and the second mirror (M2) is coated as an outcoupling mirror, and that the non-linear crystal (NK) is located between the refractive element (P) and the outcoupling mirror (M2).

14. Device according to one of the Claims 6 to 13,
**characterized in that**
the non-linear crystal (NK) is a Brewster-cut, angle-tuned non-linear crystal (NK).

15. Device according to Claim 14,
**characterized in that**
to compensate for aberrations, a spherically curved mirror (M3) is located outside of the resonator.

16. Device according to Claim 15,
**characterized in that**
the spherically curved mirror (M3) is formed from a periscope mirror designed as a concave mirror.

17. Device according to one of the Claims 6 to 15,
**characterized in that**
the non-linear crystal (NK) is cubic and is set up at a perpendicular light incidence, where the input and output surfaces of the non-linear crystal (NK) are provided with anti-reflective coatings.

18. Device according to one of the Claims 6 to 15,
**characterized in that**
a plane-parallel plate (K) of highly transparent material is placed in the beam path at the Brewster angle.

19. Device according to one of the Claims 6 to 15 and 18,
**characterized in that**
the plane-parallel plate (K) is positioned under perpendicular light incidence and is equipped with anti-reflective coatings.

20. Device according to one of the Claims 6 to 14,
**characterized in that**
a second crystal is positioned in the beam path in mirror symmetry with respect to the crystal (NK).

21. Device according to one of the Claims 6 to 18,
**characterized in that**
the peak angle of the refractive element (P) is selected so that the angle of incidence to the incoupling surface is less than the Brewster angle and the angle of incidence to the outcoupling surface is equal to the Brewster angle, and the piezoelement (PZ) is located at the first mirror (M1).

22. Device according one of the Claims 6 to 21,
**characterized in that**
the crystals (NK), the refractive element (P) and the plane-parallel plate (K) can all rotate.

## Revendications

1. Procédé pour la conversion de fréquence résonante de rayonnement laser, avec un résonateur en anneau, composé de deux miroirs (M1, M2), d'un élément réfractant (P) avec au moins deux surfaces de réfraction et d'un cristal non linéaire (NK),
**caractérisé en ce que**

le trajet du rayon à travers les deux surfaces de réfraction de l'élément réfractant (P) est accompli de sorte que la déviation du rayon est minimale, et la syntonisation du résonateur avec la fréquence du rayonnement laser incident par translation de l'élément réfractant (P) le long de son axe de symétrie (D2) a lieu pour éviter ainsi un désajustement du résonateur.

2. Procédé selon la revendication 1,
   **caractérisé en ce que**
   la conversion de fréquence est réalisée avec un cristal non linéaire (NK) accordé de façon angulaire, lequel se trouve disposé entre l'élément réfractant (P) et un miroir d'extraction (M2).

3. Procédé selon l'une des revendications précédentes,
   **caractérisé en ce que**
   le cristal non linéaire (NK) est tourné pour l'ajustement de phase sur un axe (D1) qui se trouve dans le plan de l'anneau et possède un composant perpendiculaire au le trajet du rayon à l'intérieur du cristal (NK), et dont le déplacement de rayon est compensé par un pivotement de l'élément réfractant (P) sur son axe de symétrie (D2).

4. Procédé selon l'une des revendications 1 ou 2,
   **caractérisé en ce que**
   une plaque plan-parallèle (K) en matériau hautement transparent est amenée dans le trajet du rayon selon un angle de Brewster et que le déplacement de rayon est compensé par le cristal non linéaire (NK) par rotation de la plaque (K) sur un axe (D2), lequel se trouve dans le plan de l'anneau, l'élément réfractant (P) n'étant pas déplacé.

5. Procédé selon la revendication 2 ou 3,
   **caractérisé en ce que**
   le rayon d'onde fondamentale est injecté par une des surfaces non revêtues de l'élément réfractant (P) et que la syntonisation du résonateur est réalisée par translation d'un des miroirs (M1, M2).

6. Dispositif pour l'amplification de la résonance, en particulier pour la conversion syntonisable de fréquence de rayonnement laser continu, avec un résonateur présentant un premier miroir (M1), un second miroir (M2), un cristal non linéaire (NK) et un élément réfractant trapézoïdal (P), lequel exerce la fonction d'un prisme,
   **caractérisé par**
   un moyen pour le mouvement de translation de l'élément réfractant (P) le long de son axe de symétrie (D2).

7. Dispositif selon la revendication 6,
   **caractérisé en ce que**

le moyen pour le mouvement de translation de l'élément réfractant (P) est un élément piézo-électrique (PZ).

8. Dispositif selon l'une des revendications 6 ou 7,
   **caractérisé en ce que**
   les rayons de courbure des miroirs (M1, M2) et les distances des éléments de résonance (PZ, M1, M2) sont choisis de sorte que le résonateur ainsi formé est stable sur le plan optique, et que le coefficient de réflexion du miroir d'injection (M1) est dimensionné de sorte qu'il y a un ajustement d'impédance et que le miroir d'extraction (M2) est formé de façon à être hautement réfléchissant sur la longueur d'onde fondamentale et transparent sur la longueur d'onde convertie.

9. Dispositif selon l'une des revendications 6 ou 8,
   **caractérisé en ce que**
   l'élément réfractant (P) est un prisme.

10. Dispositif selon l'une des revendications 6 à 9,
    **caractérisé en ce que**
    l'élément réfractant (P) est placé sans support directement sur l'élément piézo-électrique (PZ).

11. Dispositif selon la revendication 10,
    **caractérisé en ce que**
    l'élément réfractant (P) est collé sur l'élément piézo-électrique (PZ).

12. Dispositif selon l'une des revendications 6 à 11,
    **caractérisé en ce que**
    l'élément réfractant (P) est composé d'un matériau à transparence élevée sans revêtement, l'angle formé par les surfaces de réfraction étant choisi de sorte que l'entrée et la sortie du rayon ont lieu proches de l'angle de Brewster.

13. Dispositif selon l'une des revendications 6 à 12,
    **caractérisé en ce que**
    le premier miroir (M1) est revêtu comme miroir d'injection et le second miroir (M2) est revêtu comme miroir d'extraction, et que le cristal non linéaire (NK) est placé entre l'élément réfractant (P) et le miroir d'extraction (M2).

14. Dispositif selon l'une des revendications 6 à 13,
    **caractérisé en ce que**
    le cristal non linéaire (NK) est un cristal non linéaire (NK) accordé de façon angulaire taillé selon l'angle de Brewster.

15. Dispositif selon la revendication 14,
    **caractérisé en ce que**
    un miroir courbé sphérique (M3) est placé à l'extérieur du résonateur pour la compensation de défauts d'image.

**16.** Dispositif selon la revendication 15,
**caractérisé en ce que**
le miroir courbé de façon sphérique (M3) est formé par un miroir périscope formé comme un miroir concave.

**17.** Dispositif selon l'une des revendications 6 à 15,
**caractérisé en ce que**
le cristal non linéaire (NK) est formé de façon cubique et est placé par incidence verticale de la lumière, les surfaces d'entrée et de sortie du cristal non linéaire (NK) étant munies d'un revêtement antireflet.

**18.** Dispositif selon l'une des revendications 6 à 15,
**caractérisé en ce que**
une plaque plan-parallèle (K) en matériau hautement transparent est placée dans le trajet du rayon selon l'angle de Brewster.

**19.** Dispositif selon l'une des revendications 6 à 15 et 18,
**caractérisé en ce que**
la plaque plan-parallèle (K) est placée par incidence verticale de la lumière et est munie d'un revêtement antireflet.

**20.** Dispositif selon l'une des revendications 6 à 14,
**caractérisé en ce que**
un second cristal placé symétriquement en miroir par rapport au cristal (NK) est placé dans le trajet du rayon.

**21.** Dispositif selon l'une des revendications 6 à 18,
**caractérisé en ce que**
l'angle du sommet de l'élément réfractant (P) est choisi de sorte que l'angle d'incidence à la surface d'injection est plus petit que l'angle de Brewster et l'angle d'incidence à la surface d'extraction est égal à l'angle de Brewster, l'élément piézo-électrique (PZ) étant placé sur le premier miroir (M1).

**22.** Dispositif selon l'une des revendications 6 à 21,
**caractérisé en ce que**
les cristaux (NK), l'élément réfractant (P) et la plaque plan-parallèle (K) sont placés de façon à pouvoir pivoter.

**Fig. 1**

**Fig. 2**

**Fig. 3**

**Fig. 4**

**Fig. 5**

**Fig. 6**

Horizontale
Ablenkung
[Grad]

Drehwinkel $\psi$ [Grad]

**Fig. 7**

**Fig. 8**

**Fig. 9**